# EUROPÄISCHE PATENTANMELDUNG

(11) **EP 1 291 212 A1**
(43) Veröffentlichungstag der Anmeldung: **12.03.2003**
(21) Anmeldenummer: 01121440.0
(22) Anmeldetag: 07.09.2001
(51) Int. Cl.: B60J 5/10

(54) **Klappe mit geklebter Scheibe**

(71) Anmelder: Ford Global Technologies, Inc., A subsidiary of Ford Motor Company, Dearborn, Michigan 48126 (US)
(72) Erfinder: Strausfeld, Bruno, 50129 Bergheim (DE); Cömert, Güner, 50678 Köln (DE)
(74) Vertreter: Drömer, Hans-Carsten, Dipl.-Ing.

(57) **Zusammenfassung**

Die Erfindung betrifft eine schwenk- oder schiebbare Klappe mit geklebter Scheibe (3), bevorzugt für Fahrzeuge, wobei die Klappe eine tragende Blechstruktur aufweist, bestehend aus zumindest einem Außenblech (4) und einem Innenblech (5), die beide im Bereich der Scheibenöffnung gemeinsam einen Flansch bilden, und wobei die Scheibe (3) zumindest teilweise mit der Blechstruktur im Bereich der Scheibenöffnung verklebt ist. Sie ist dadurch gekennzeichnet, daß der Flansch zumindest abschnittsweise als Bördelflansch (7) ausgebildet ist, wobei das Innenblech (5) über das Außenblech (4) derart gebördelt ist, daß die Beschnittkante (10) des Innenblechs (5) zwischen Außenblech (4) und Scheibe (3) liegt. Damit kann auf zusätzliche Dichtund Zierleisten sowie auf Verkleidungen im Bereich der inneren Scheibenöffnung verzichtet werden.

## Beschreibung

Die Erfindung bezieht sich auf eine schwenk- oder schiebbare Klappe mit geklebter Scheibe der im Oberbegriff des Patentanspruchs 1 erläuterten Art.

Aus der DE 198 16 027 ist eine Heckklappe bekannt, bei der ein Außenblech und ein Innenblech miteinander zu einer tragenden Blechstruktur verbunden sind und bei der die Heckscheibe mit dem Außenblech verklebt ist. Außenblech und Innenblech bilden am Bereich der Heckscheibe zumindest teilweise ein Hohlprofil und sind in der Heckscheibenöffnung über einen gemeinsamen Flansch verbunden, wobei die Flanschfläche überwiegend senkrecht zur Heckscheibe ausgerichtet ist.

Viele der heute üblichen Hecklappen weisen einen solchen Aufbau aus, allerdings verlaufen Flanschflächen der Flansche in der Ausschnittsöffnung eher parallel zur Heckscheibe. Dies ist eine Folge der Herstellung, da Außen- und Innenbleche meistens tiefgezogen werden und dann die Fügung bevorzugt über Flansche verläuft, die in einer Ebene liegen, und diese Ebene ist ungefähr identisch mit der Scheibenfläche.

Flansche, vor allem von Tiefziehteilen, weisen immer eine Abdichtleiste und/oder eine Innenverkleidung auf und/oder erfordern einen hohen Aufwand an Nachbearbeitung. Zum einen ist dies aus optischen Gründen erforderlich, da solche Flanschkanten nicht gleichmäßig sind und die Flansche, wenn z. B. Außen- und Innenblech am Flansch verschweißt sind, auch sehr grobe Bearbeitungsspuren aufweisen können. Zum anderen ist die Verkleidung oder Abdeckung aus Sicherheitsgründen notwendig, da die Beschnittkanten tiefgezogener Bleche sehr scharfkantig sind, so daß es beim Hantieren an der Heckscheibe sehr leicht zu Verletzungen kommen könnte.

Aufgabe der vorliegenden Erfindung ist es deshalb, eine Klappe zu schaffen, die im Bereich des Flansches einer Scheibenöffnung einen geringen Fertigungsaufwand erfordert.

Gelöst wird diese Aufgabe mit den Merkmalen des Anspruches 1.

Indem der Flansch zumindest abschnittsweise als Bördelflansch ausgebildet ist, wobei das Innenblech über das Außenblech derart gebördelt ist, daß die Beschnittkante des Innenblechs zwischen Außenblech und Scheibe liegt, weist der Bördelflansch eine saubere Bördelkante in der Scheibenöffnung auf. Diese Bördelkante ist vergleichbar mit den Bördelkanten an Türen und Klappen von Kraftfahrzeugen, die alle eine hervorragende Qualität aufweisen, wie z. B. in der DE 4224423 beschrieben. Durch die Anordnung der Beschnittkante des Innenbleches zwischen Scheibe und Blechstruktur ist die Beschnittkante von der Fahrzeuginnenseite her nicht sichtbar und Personen können die Beschnittkante, die bei Tiefziehblechen in der Regel sehr scharf ist, nicht berühren.

Bevorzugt ist dabei der Flansch in der gesamten Scheibenöffnung umlaufend als Bördelflansch ausgebildet. Damit erfolgt die Fügung von Außen- und Innenblech ausschließlich durch die Bördelung, wobei hier natürlich u. U. auch Dichtungskleber in die Bördelung mit eingebracht werden kann. Vorteilhaft kann dadurch auf zusätzliche Fügungen auf dem Flansch verzichtet werden, da vor allem zusätzliche Schweißungen oder Nieten die optische Erscheinung des glatten Bördelflansches stören würden.

In einer bevorzugten Ausführung weist die Klappe zumindest teilweise im Bereich des Bördelflansches keine zusätzliche Dicht- oder Zierleiste neben der Verklebung auf. Die Abdichtung wird vollständig von der Klebernaht der Scheibenverklebung erfüllt, die Abdeckfunktion einer Dichtleiste entfällt, da die stumpfe Bördelkante keine Abdeckung benötigt.

In einer weiteren bevorzugten Ausführung weist die Klappe zumindest teilweise im Bereich des Bördelflansches kein Innenverkleidungsteil auf. Damit bildet das Innenblech zumindest in Teilbereichen gleichzeitig auch die Innenseite der Klappe und ist damit sichtbar.

Der Verzicht auf Dichtleisten und/oder Innenverkleidungsteilen bedeutet einen Gewichts- und einen Kostenvorteil bei der Herstellung der Klappe. Weiterhin kann aufgrund der fehlenden Innenverkleidung die Blechstruktur im Bereich der Scheibenöffnung mit größeren Querschnitten dimensioniert werden, wodurch die Festigkeit und die Steifigkeit der Klappe erhöht wird, ohne daß Platz- oder Sichtverhältnisse im Fahrzeug eingeschränkt werden.

Weitere Einzelheiten und Vorteile der Erfindung ergeben sich aus den Zeichnungen einer erfindungsgemäßen Heckklappe eines Kraftfahrzeuges. Es zeigen:
- Fig. 1: die Anordnung der Hecklappe in einem Kraftfahrzeug,
- Fig. 2: den Schnitt A-A durch die Mittellinie der Hecklappe am Dachrahmen;
- Fig. 3: die Detailansicht I des Bördelflansches aus Fig. 2; und
- Fig. 4: den Schnitt B-B durch die Hecklappe an der hinteren Säule.

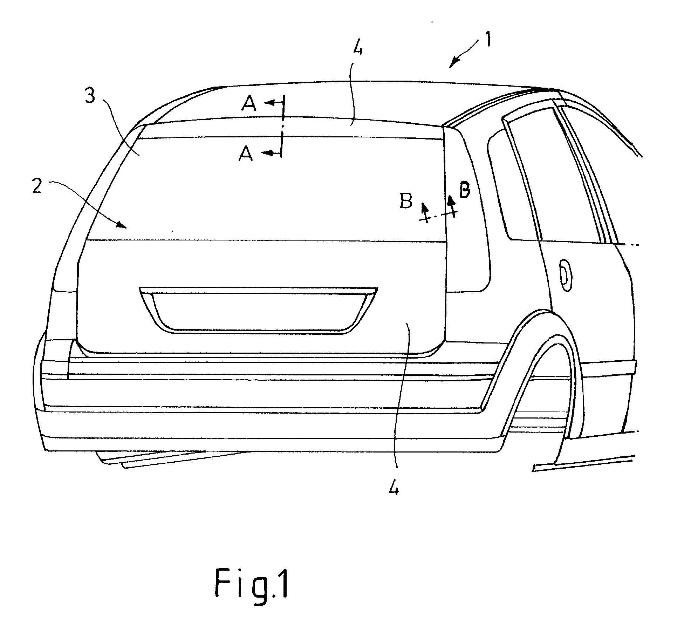

In Figur 1 ist ein Kraftfahrzeug 1 mit der Hecklappe 2 dargestellt, wobei die Heckklappe 2 die Scheibe 3 und das Außenblech 4 aufweist.

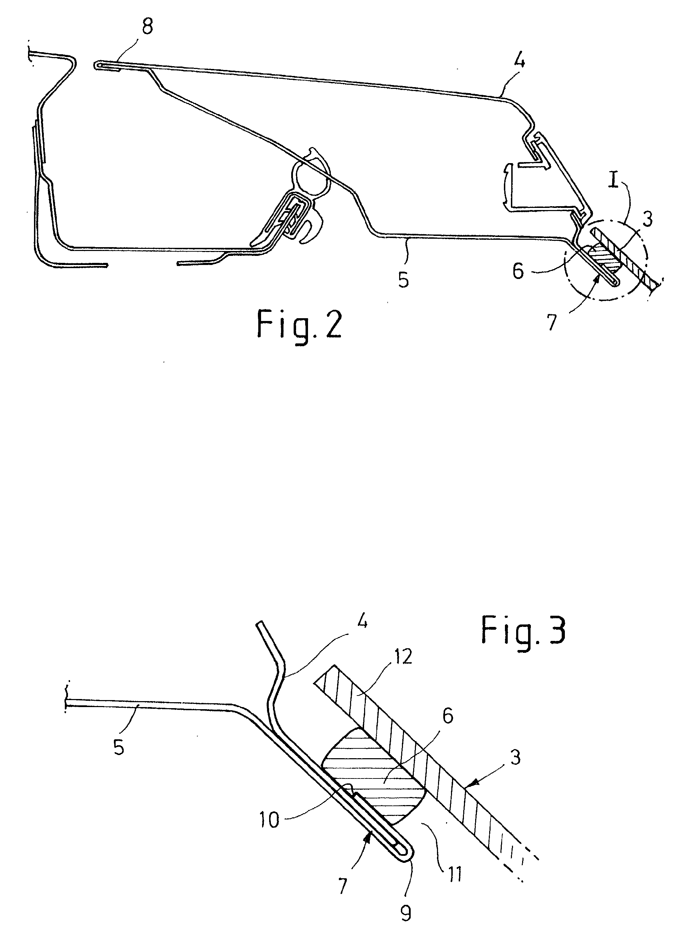

Figur 2 zeigt den Schnitt A-A durch die Mittellinie der Hecklappe 2 am Dachrahmen. Die Blechstruktur der Heckklappe besteht in diesem Bereich aus dem Außenblech 4 und dem Innenblech 5. Die Scheibe 3 ist mittels der Klebernaht 6 mit dem Bördelflansch 7 verklebt. Außenblech 4 und Innenblech 5 sind in der Scheibenöffnung am Bördelflansch 7 und am Außenumfang der Hecklappe 2 am äußeren Bördelflansch 8 verbunden.

In Figur 3 zeigt die vergrößerte Darstellung des Bördelflansches 7, wie das Innenblech 5 über das Außenblech 4 umgeschlagen, d. h. gebördelt ist. Dies steht im wesentlichen Unterschied zum äußeren Bördelflansch 8, bei dem das Außenblech 4 über das Innenblech 5 geschlagen wird.

Am Bördelflansch 7 bildet sich die stumpfe Bördelkante 9 mit einem Radius, der auf jeden Fall größer ist als die Blechdicke des Innenbleches 3. Die Beschnittkante 10 des Innenbleches 5 liegt dabei zwischen Bördelflansch 7 und der Scheibe 3 und ist damit vom Innenraum des Kraftfahrzeuges her nicht mehr zu sehen. Der Spalt 11 zwischen Bördelflansch 7 und Scheibe 3 wird durch die Klebernaht mehr oder weniger ausgefüllt, je nachdem wie die erforderliche Spaltdicke ist. Durch die breite Ausgestaltung des Bördelflansches 7 kann die Klebernaht 6 auch noch breiter werden, ohne daß sie vom Innenraum oder von außen sichtbar wäre.

Weiterhin bietet die Klebernaht 6 im Spalt 11 einen dunklen Hintergrund, so daß bei der Betrachtung des Bördelflansches 7 nur ein schwarzer Spalt zwischen Bördelkante 9 und Scheibe 3 zu sehen ist, womit vom Innenraum des Kraftfahrzeuges aus gesehen ein ansprechender optischer Eindruck der Gestaltung von Innenblech 5, Bördelflansch 7 und Scheibe 3 erzielt wird. Weitere Verkleidungen, Abdeckungen und/oder Zier- oder Dichtleisten sind nicht notwendig.

Damit die Klebernaht 6 von außen nicht gesehen wird, verfügt die Scheibe 3 über eine Abdunklung 12, die zumindest den Bereich des Bördelflansches 7 abdeckt.

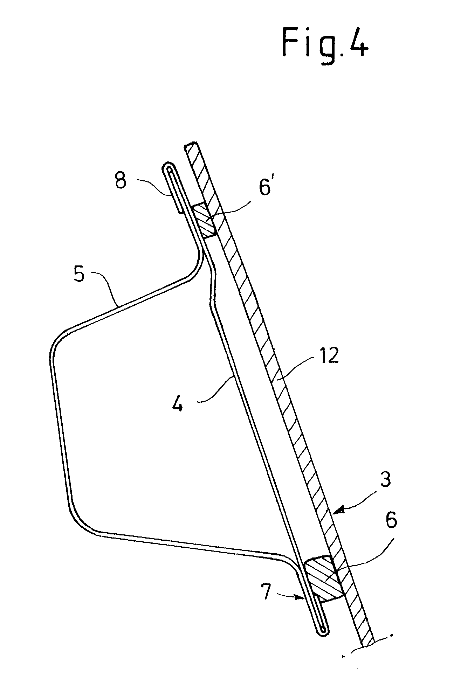

In Figur 4 ist der Schnitt B-B durch die Hecklappe 2 an der hinteren Säule des Kraftfahrzeuges 1 dargestellt. Hier überdeckt die Scheibe 3 komplett die Heckklappe 2, d. h. an diesem Schnitt verdeckt die Scheibe 3 das Außenblech 4 und das Innenblech 5. Deutlich zu sehen ist hier die umgekehrte Bördelrichtung von Bördelflansch 7, wo das Innenblech 5 über das Außenblech 4 geschlagen ist, und äußerem Bördelflansch 8, wo das Außenblech 4 über das Innenblech 5 geschlagen ist. Hier ist die Scheibe 3 über den gesamten Bereich zwischen Bördelflansch 7 und äußerem Bördelflansch 8 mit einer Abdunklung 12 versehen. Aus Festigkeitsgründen ist die Scheibe 3 in diesem Bereich neben der umlaufenden Klebernaht 6 mit einer zusätzlichen Klebernaht 6' mit der Blechstruktur verklebt.

Es versteht sich von selbst, daß die erfindungsgemäße Ausführung der Klappe nicht auf die beschriebene Blechstruktur mit Außen- und Innenblech beschränkt ist, sondern es sind auch Kombinationen möglich, bei denen andere Materialien als die beschriebenen Tiefziehbleche für Außen- und Innenblech zum Einsatz kommen, d. h. Außen- und/oder Innenblech sind aus Feinguß, Kunststoff, Faserverbundmaterialen etc. hergestellt.

Weiterhin ist die Anwendung des Bördelflansches nicht auf bewegliche Klappen alleine beschränkt, sondern auch auf andere Scheibenöffnungen anwendbar, wo Scheiben fest mit der Karosserie verbunden sind, wie Windschutzscheiben, Heckscheiben, Dachscheiben etc.

## Patentansprüche

1. Schwenk- oder schiebbare Klappe mit geklebter Scheibe (3), bevorzugt für Fahrzeuge, wobei die Klappe eine tragende Blechstruktur aufweist, bestehend aus zumindest einem Außenblech (4) und einem Innenblech (5), die beide im Bereich der Scheibenöffnung gemeinsam einen Flansch bilden, und wobei die Scheibe (3) zumindest teilweise mit der Blechstruktur im Bereich der Scheibenöffnung verklebt ist,
**dadurch gekennzeichnet, daß**
der Flansch zumindest abschnittsweise als Bördelflansch (7) ausgebildet ist, wobei das Innenblech (5) über das Außenblech (4) derart gebördelt ist, daß die Beschnittkante (10) des Innenblechs (5) zwischen Außenblech (4) und Scheibe (3) liegt.

2. Klappe nach Anspruch 1,
**dadurch gekennzeichnet, daß**
der Flansch in der gesamten Scheibenöffnung umlaufend als Bördelflansch (7) ausgebildet ist.

3. Klappe nach Anspruch 1,
**dadurch gekennzeichnet, daß**
die Klappe zumindest teilweise im Bereich des Bördelflansches (7) keine Dichtoder Zierleiste aufweist.

4. Klappe nach Anspruch 1,
**dadurch gekennzeichnet, daß**
die Klappe zumindest teilweise im Bereich des Bördelflansches (7) kein Innenverkleidungsteil aufweist.
